# EUROPEAN PATENT SPECIFICATION

(11) **EP 0 450 134 B1**
(45) Date of publication and mention of the grant of the patent: **13.08.1997**
(21) Application number: 90108649.6
(22) Date of filing: 08.05.1990
(51) Int. Cl.: H01J 29/88, H01J 9/20

(54) **Method of preparing an anti-dazzling and electrostatic charge-preventive transparent coating material**
Verfahren zur Herstellung eines Blendschutz bewirkenden und elektrostatische Aufladung verhindernden transparenten Beschichtungsmaterials
Procédé pour preparer un matériau de revêtement transparent protégeant contre l'éblouissement et empêchant la charge électrostatique

(30) Priority: 31.03.1990 KR 904447
(43) Date of publication of application: 09.10.1991
(73) Proprietor: SAMSUNG DISPLAY DEVICES CO., LTD., Hwaseong-gun, Kyungki-do (KR)
(72) Inventor: Son, Changmin, Suwon-si, Kyunggi-do (KR); Jeong, Soomin, Kwonseon-gu, Suwon-shi, Kyunggi-do (KR); Kim, Hunsoo, Yongsan-gu Seoul (KR)
(74) Representative: WILHELMS, KILIAN & PARTNER Patentanwälte

(56) References cited:
- EP-A- 0 283 128
- FR-A- 2 629 268
- GB-A- 2 007 536
- PATENT ABSTRACTS OF JAPAN, unexamined applications, E field, vol. 8, no. 209, September 22, 1984 THE PATENT OFFICE JAPANESE GOVERNMENT, page 10 E 268
- DERWENT ACCESSION NO. 79-28 341B, Questel Tele- systems (WPI(L)) DERWENT PUBLICATIONS LTD., London

## Description

The present invention concerns a method of preparing an anti-dazzling and electrostatic charge preventive transparent coating material, which is applied to the external surface of a video display or CRT to prevent dazzling and electrostatic charging.

Generally, the screen of CRT or LCD is made of a transparent material such as glass or reinforced plastic, which are insulating materials having high surface resistance to accumulate electrostatic charges, so that foreign materials such as dusts in the atmosphere are adhered to the screen surface, thereby deteriorating the visual quality. Moreover, the user may be subjected to an electrical shock. Additionally, if the LCD substrate is electrostatically charged, there may occur such mis-operation that the segment not supplied with a driving voltage is driven.

Meanwhile, the surface of the screen is generally flat, and directly reflects the external light, so that it tends to make it difficult to distinctly view the images displayed on the screen. This tendency becomes more serious as the external light becomes stronger. In a place of high illumination, it is impossible to distinctly view the images on the display having low brightness such as LCD and CRT. Hence, long time use of such a display causes the user's eyes to be fatigued.

Conventionally, in order to solve the external light reflecting problems as described above, a coating material mainly comprising a polymer containing silica is applied to the external surface of a video display by spraying, thereby roughening it so as to effect diffused reflection (refer to U.S.Patent No.3,689,312 and Japanese Patent Application Laid-Open No.sho 61-118,932), or alcohol or water solution mainly comprising silicate is applied to the external surface of a video display to form a continuous coating, which is mechanically rubbed, finely roughend to effect diffused reflection (Japanese Patent Application No.sho 63-138,724.

In addition, the electrostatic charge problem as described is solved by applying one of the following compositions to the external surface of the video display:
(A) mixture of fluorinated water repellant, chlorinated surfactant and alcohol (refer to Japanese Patent Application Laid-Open No.sho 60-156,783);
(B) silicon alcoholate to form a SiO2 film, which is grounded (refer to Japanese Patent Application Laid-Open No.sho 63-158,733); and
(C) alcoholic silicasol obtained by hydrolyzing a hydrolytic silicate, with an addition of metallic compound (refer to Japanese Patent Application Laid-Open No.sho 61-16452).

Further, if the electrostatic charge preventive coating material of the Japanese Patent Application Laid-Open No.sho 61-16452 is sprayed on the screen so as to roughen the external surface of a wide screen to effect diffused reflection, it is hardly to uniformly roughen the whole surface of the screen. Moreover, since the electrostatic charge preventive effect of this coating material is caused by the moisture in the atmosphere absorbed by the material, it is hardly achieved in a low moisture area or weather, and water resistance of the material is considerably low.

In Japanese Patent Application Laid-Open No. sho 60-221937, there is disclosed a CRT whose external glass surface is roughened and coated with 1-valence alcohol or ester colloidal solution of SiCl4. In this case, preparation of the roughened surface to effect diffused reflection and application of the coating material to prevent the electrostatic charge are performed separately with each other, thereby complicating the process, so that the cost is increased and the effect of diffused reflection and electrostatic charge prevention is not enough.

According to the method disclosed in Japanese Patent Application Laid-Open No. sho 63-160131, the solution of polyalkyl siloxane is applied to the external surface of the screen, subjected to condensation, so that the silanol(SiOH) residing on the surface reacts on the moisture in the atmosphere to have conductivity, thereby preventing the electrostatic charge. In this case, the conductivity depends on the moisture in the atmosphere, and therefore, the effect of the electrostatic charge prevention is not enough achieved in a drying weather.

Referring to P270-273, SID 89 DIGEST, in order to simultaneously achieve the effects of diffused reflection and electrostatic charge prevention, an electrostatic charge preventive composition is evenly applied to the external screen surface, which is again coated with a composition containing particulates to effect diffused reflection. In this case, the complicated process not only increases the production cost, but also requires particulate production and dispersion apparatuses in order to produce the particulates dispersed composition. Further, additives such as dispersion agent is required, so that the production cost of the composition is increased.

EP-A-0 283 128 describes a method where an antidazzling and antistatic coating is prepared by spray coating a solution comprising 1 wt% tin oxide as a metal compound, 9 wt% ethyl silicate, 1 wt% nitric acid as a catalist, 10 wt% water and 79 wt% ethanol as an organic solvent. FR-A-2 629 268 discloses a coating formed by hydrolysis of a dispersion of an oxide mixture of Sn, Sb or In in an alcoholic solution of ethyl silicate, containing an acid as a catalist.

The object of the present invention is to provide a method for preparing an anti-dazzling and electrostatic charge preventive transparent coating material, which is applied to the screen of a video display not by spray coating but by immersion or spin coating, and the corresponding method of producing said a video display coated therewith.

According to the present invention, an anti-dazzling and electrostatic charge-preventive transparent coating material comprises at least two kinds of conductive metallic compounds dissolved in an organic solvent and concentrated, the concentrate being added with water and acid and base catalysts to form a transparent solution containing fine particulates, ethyl silicate dissolved in another organic solvent, said transparent solution and the ethyl silicate solution being mixed together to cause hydration and polycondensation, thereby leading the growth of particulate solid ingredient.

The anti-dazzling and electrostatic charge preventive transparent coating material prepared in accordance with the method of the present invention is applied to the screen of a video display to form a conductive coating having finely particulate roughened surface.

According to the present invention, there is provided a method for preparing an anti-dazzling and electrostatic charge-preventive transparent coating material according to claim 1; further aspects and embodiments of the invention are covered by the methods according to claims 2 to 7.

According to the present invention, the transparent solution and the ethyl silicate solution are mixed together to cause hydration and polycondensation, thereby leading the growth of particulate solid ingredient in the final product.

Due to the particulate solid ingredient, even if the material is applied to the screen not by spray coating but by immersion or spin coating, it produces good anti-dazzling effect.

The conductive metallic compounds are selected from tin, antimony, and indium. At least two of these metallic compounds are mixed to effect a desired anti-dazzling and electrostatic charge prevention.

The organic solvents used in the method of the present invention are selected from alcohol, ketone and acetate, or a mixture of at least two of them.

The catalyst is selected from chloric acid, nitric acid or ammonia water.

In the transparent coating material used in the method according to the invention, the added amount of ethyl silicate is 1 to 20 weight% to the total composition.

If the amount is less than 1 weight%, the strength of the coating is not enough, while if the amount is greater than 20 weight%, the viscosity is too high to make a good coating.

The added amount of the metallic compounds is 0.04 to 9 weight% to the total composition. If the amount is less than 0.04, the conductivity is not enough, while if the amount is greater than 9, the strength of the coating is reduced.

The added amount of acid or base catalyst is 0.001 to 2.5 weight% to the total composition. The amount of the catalyst is an important factor for determining the size and amount of the particulates produced in the final product. If the amount is too much, the particulates are produced too many, having too great a size, thereby impairing the transparency. On the other hand, if the amount is too small, the particulate are produced too small, having too small a size, thereby impairing the anti-dazzling.

The content of the organic solvent to the total composition is 70 to 98 weight%. If the amount is too much, the viscosity is lowered, while if it is too small, the viscosity is too much enhanced, thereby impairing the coating.

### BRIEF DESCRIPTION OF THE DRAWINGS

Figs. 1 to 3 show microscopic photographs taken with an 200 to 400 times enlarged scale of the screen coated with the coating materials obtained in the method according to the invention by spin coating;
Fig. 4 shows a microscopic photograph taken with an 125 times enlarged scale of the screen coated with the prior art coating material by spray coating; and
Fig. 5 illustrates a partial cross section of a CRT coated with the coating materials obtained in the method according to the invention.

### DETAILED DESCRIPTION OF THE INVENTION

The process for preparing a transparent coating material may be readily performed at the normal temperature and pressure. The coating material is applied to the external screen surface of a video display such as a CRT by the conventional immersion or spin coating so as to form a conductive coating having fine particulate projections, thus making the screen simultaneously have the anti-dazzling and electrostatic charge preventive properties.

Further, if the screen coated with the coating material is subjected to the conventional rubbing treatment, the particulates are easily removed off the coating, thus creating fine depressions on the coating surface, so that the screen has almost the same anti-dazzling property as the screen before the rubbing treatment.

Hereinafter are described specific examples of the inventive method for preparing the transparent coating material, and a video display coated therewith, which examples do not restrict the present invention.

### EXAMPLE 1

90g of ethyl silicate is dissolved in the solvent mixed of ethanol and isopropanol so as to obtain ethyl silicate solution having the total amount of 860ml.

Separately in an ethanol are dissolved 20g of tin chloride hydrate(SnCl4.nH2O) and 5g of antimony chloride(SbCl3) to prepare a metallic compound solution having the total amount of 50ml. This solution is heated at 75°C under the normal pressure, concentrated until the total volume thereof being reduced to a half. The concentration is added with a water so as to have the total volume of the original solution, which in turn is combined with 0.7ml of hydrochloric acid and 2ml of ammonia water(NH40H) as catalysts, thereby forming a transparent solution containing particulates.

The transparent solution is combined with the previously prepared ethyl silicate solution so as to be subjected to hydration and polycondensation, thus obtaining the desired transparent coating material.

### EXAMPLE 2

85g of ethyl silicate is dissolved in the solvent mixed of methanol and isopropanol so as to obtain ethyl silicate solution having the total amount of 870ml.

Separately in a methanol are dissolved 8g of indium chloride hydrate(InCl3.nH2O) and 1g of tin chloride hydrate(SnCl4.nH2O) to prepare a metallic compound solution having the total amount of 30ml. This solution is heated at 75°C under the normal pressure, concentrated until the total volume thereof being reduced to a half. The concentration is added with a water so as to have the total volume of the original solution, which in turn is combined with 0.8ml of hydrochloric acid and 0.7ml of ammonia water(NH4OH) as catalysts, thereby forming a transparent solution containing particulates.

The transparent solution is combined with the previously prepared ethyl silicate solution so as to be subjected to hydration and polycondensation, thus obtaining the desired transparent coating material.

### EXAMPLE 3

50g of ethyl silicate is dissolved in the solvent mixed of methanol, isopropanol and ethanol so as to obtain ethyl silicate solution having the total amount of 420ml.

Separately in a methanol are dissolved 5g of indium nitride hydrate(In(NO3)3.nH2O) and 0.9g of tin chloride hydrate (SnCl4.nH2O) to prepare a metallic compound solution having the total amount of 30ml. This solution is heated at 80°C under the normal pressure, concentrated until the total volume thereof being reduced to a half. The concentration is added with a water so as to have the total volume of the original solution, which in turn is combined with 3ml of hydrochloric acid and 1.2ml of ammonia water(NH40H) as catalysts, thereby forming a transparent solution containing particulates.

The transparent solution is combined with the previously prepared ethyl silicate solution so as to be subjected to hydration and polycondensation, thus obtaining the desired transparent coating material.

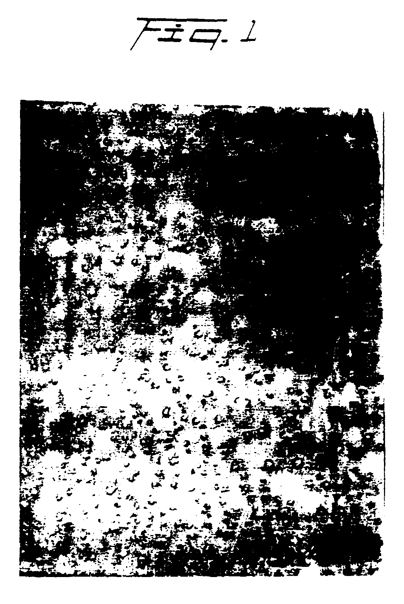

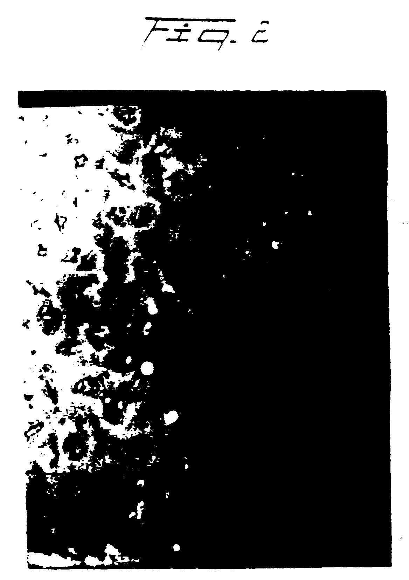

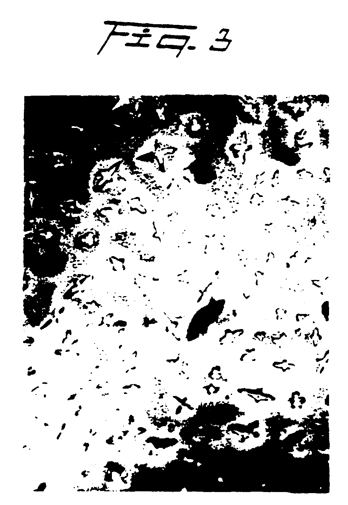

The transparent coating material obtained in the above examples 1 to 3 is applied to the glass screen by spin coating, which coating surface is microscopically photographed at 200 to 400 times enlarged scale, as shown in Figs. 1 to 3. The electric resistance of the coated surface has been measured to have the value of 1.0 x 10⁹ to 8.5 x 10¹⁰ ohm. ("Megaresta" of Japanese Shishido Electrostatic Ltd., with the applied voltage of 500V, is used for the measuring).

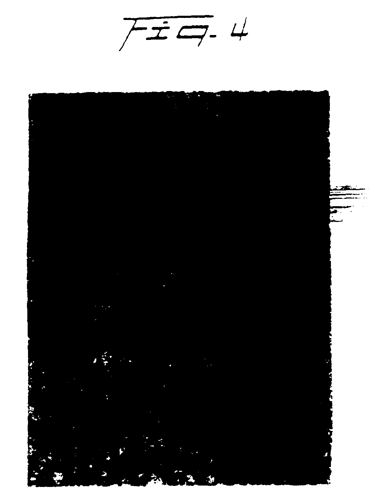

Meanwhile, in order to compare with the transparent coating material obtained in the method according to the invention, the conventional conductive coating material disclosed in Japanese Patent Application Laid-Open No. sho 61-16452 is applied to the screen by spray coating, which coating surface is microscopically photographed at 125 times enlarged scale, as shown in Fig. 4. The electric resistance of the coated surface has been measured to have the value of 8 x 10⁹ to 5 x 10¹¹ ohm ("Megaresta" of Japanese Shishido Electrostatic Ltd., with the applied voltage of 500V, is used for the measuring).

As illustrated by the enlarged photographs of Figs. 1 to 4 and the values of the surface resistances, the transparent coating material obtained in the method according to the invention inherently contains solid particulates, so that even if it is applied to the screen by the immersion or spin coating, the solid particulates forms fine projections on the screen to have an excellent anti-dazzling property and good conductivity for preventing the electrostatic charge.

Meanwhile, the video display coated with the coating material obtained in the method according to the invention may be manufactured according to the conventional process as follows. Although the CRT is used as the video display in the example for descriptive convenience, other kinds of display may be used.

The transparent coating material obtained by the method of Examples 1 to 3 in accordance with the invention is applied to the screen of the CRT by the immersion or spin coating, which is subjected to heat treatment in the temperature range of 80 to 490°C, and then cooled to the room temperature.

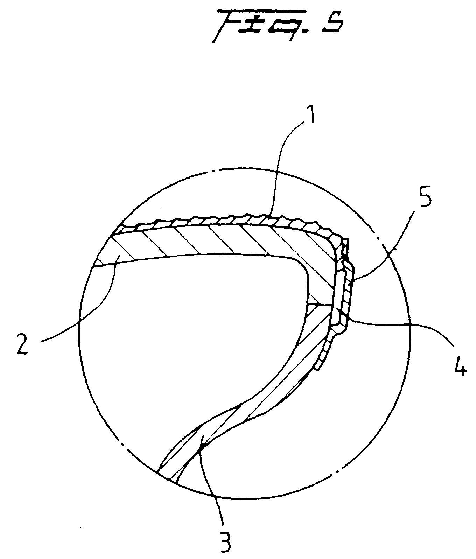

In order that the CRT coated as described above has an adequate electrostatic charge preventive property, a graphite layer is deposited on coated layer 1 on panel 2, anti-explosion band 4 and funnel 3, and has aluminium or copper tape 5 attached thereon for electrical conduction, as shown in Fig.5.

The anti-dazzling and electrostatic charge preventive screen surface of a CRT prepared according to the present invention has the particulates projected on the coated layer, as shown in Fig. 5, which particulates, if necessary, may be rubbed off the coated layer so as to form fine depressions thereon.

The particulates in the transparent coating materials obtained in the method according to the invention are very fine, and therefore, whether they are removed off the coated layer by rubbing or not does always impart a good anti-dazzling property to the screen.

Moreover, this transparent coating material is readily synthesized without dispersing fine particulates of conductive metals or oxides as in the conventional composition, so that the production cost is reduced and the synthesizing process is very simplified.

## Claims

1. A method of preparing an anti-dazzling and electrostatic charge-preventive transparent coating material comprising:
1 to 20 wt % of ethyl silicate;
0.04 to 9 wt % of at least two different compounds of Sn, Sb and In;
0.001 to 2.5 wt % of at least one catalyst having an acid or hydroxyl base;
70 to 98 wt % of at least one organic solvent; and
a residual amount of water to make 100 wt %, said method comprising the steps of:
dissolving said at least two different metal compounds in said organic solvent and evaporating solvent to attain a concentrated solution;
adding water and said catalyst to said concentrated solution thereby to obtain a transparent solution containing fine particulate;
dissolving ethyl silicate in said organic solvent to form an ethyl silicate solution; and
mixing together said transparent solution and said ethyl silicate solution to cause hydrolysis and polycondensation, thereby leading to the growth of a particulate solid mixture.

2. Method as claimed in Claim 1, characterized by said organic solvent being selected from alcohol, ketone and acetate, or a mixture of at least two of them.

3. Method as claimed in Claim 1, characterized by said catalyst being chloric acid, nitric acid or ammonia water, or the mixture thereof.

4. A method of producing a video display having a screen externally coated with a transparent material heat treated at the temperature from 80 to 490°C, said material being prepared according to a method of at least one of the claims 1 to 3.

5. A method as claimed in Claim 4, characterized by said screen coated with said transparent material by immersion or spin coating.

6. A method as claimed in Claim 4, characterized by said screen being rubbed after heat treatment.

7. A method as claimed in Claim 4, characterized by said coating being grounded.

## Patentansprüche

1. Verfahren zur Herstellung eines Blendschutz bewirkenden und elektrostatische Aufladung verhindernden transparenten Beschichtungsmaterials, enthaltend:
1 bis 20 Gew.% Ethylsilikat;
0,04 bis 9 Gew.% zumindest zweier der Verbindungen Sn, Sb und In;
0,001 bis 2,5 Gew.% zumindest eines Katalysators mit einer Säure oder Hydroxylbase;
70 bis 98 Gew.% zumindest eines organischen Lösungsmittels; und
einer Restmenge an Wasser zum Erhalt von 100 Gew.%,
mit den Stufen:
Lösen von wenigstens zwei verschiedenen Metallverbindungen in dem organischen Lösungsmittel und Verdampfen von Lösungsmittel zum Erhalt einer konzentrierten Lösung;
Zugabe von Wasser und Katalysator zu der konzentrierten Lösung zum Erhalt einer transparenten, Feinpartikel enthaltenden Lösung;
Lösen von Ethylsilikat in dem organischen Lösungsmittel zur Bildung einer Ethylsilikatlösung; und
Zusammenmischen der transparenten Lösung und der Ethylsilikatlösung zum Bewirken von Hydrolyse und Polykondensation, was zum Wachstum einer Partikelfestmischung führt.

2. Verfahren gemäß Anspruch 1, dadurch gekennzeichnet, daß es sich bei dem organischen Lösungsmittel um Alkohol, Keton und/oder Acetat oder eine Mischung wenigstens zweier davon handelt.

3. Verfahren gemäß Anspruch 1, dadurch gekennzeichnet, daß es sich bei dem Katalysator um Salzsäure, Salpetersäure oder Ammoniakwasser oder Mischungen davon handelt.

4. Verfahren zur Herstellung eines Videodisplays mit einem Schirm, der äußerlich mit einem transparenten Material, das bei einer Temperatur von 80 bis 490 °C wärmebehandelt wurde, beschichtet ist, wobei das Material nach einem Verfahren gemäß wenigstens einem der Ansprüche 1 bis 3 hergestellt worden ist.

5. Verfahren gemäß Anspruch 4, dadurch gekennzeichnet, daß der Bildschirm mit dem transparenten Material durch Eintauchen oder Spinbeschichtung beschichtet wird.

6. Verfahren gemäß Anspruch 4, dadurch gekennzeichnet, daß der Bildschirm nach der Wärmebehandlung abgerieben wird.

7. Verfahren gemäß Anspruch 4, dadurch gekennzeichnet, daß die Beschichtung geerdet ist.

## Revendications

1. Procédé de préparation d'une matière de revêtement transparente anti-éblouissement et anti-charge électrostatique, comprenant:
de 1 à 20 % en poids de silicate d'éthyle;
de 0,04 à 9 % en poids d'au moins deux composés différents choisis parmi ceux de Sn, de Sb et d'In;
de 0,001 à 2,5 % en poids d'au moins un catalyseur comprenant un acide ou une base hydroxylée;
de 70 à 98 % en poids d'au moins un solvant organique; et
une quantité résiduelle d'eau pour obtenir 100 % en poids, ce procédé comprenant les étapes consistant:
à dissoudre lesdits au moins deux composés métalliques différents, dans ledit solvant organique, et à évaporer le solvant pour obtenir une solution concentrée;
à ajouter de l'eau et ledit catalyseur dans ladite solution concentrée, de façon à obtenir une solution transparente contenant de fines particules;
à dissoudre du silicate d'éthyle dans ledit solvant organique, pour former une solution de silicate d'éthyle; et
à mélanger ensemble ladite solution transparente et ladite solution de silicate d'éthyle, pour provoquer une hydrolyse et une polycondensation, de façon à donner lieu au développement d'un mélange solide particulaire.

2. Procédé selon la revendication 1, caractérisé en ce que ledit solvant organique est choisi parmi un alcool, une cétone et un acétate, ou un mélange d'au moins deux de ceux-ci.

3. Procédé selon la revendication 1, caractérisé en ce que ledit catalyseur est l'acide chlorique, l'acide nitrique ou l'ammoniac aqueux, ou un mélange de ceux-ci.

4. Procédé de production d'un dispositif d'affichage vidéo, comprenant un écran revêtu extérieurement d'une matière transparente traitée à chaud à une température de 80 à 490 °C, cette matière étant préparée en mettant en oeuvre un procédé selon au moins une des revendications 1 à 3.

5. Procédé selon la revendication 4, caractérisé en ce que ledit écran est revêtu de ladite matière transparente par immersion ou par centrifugation.

6. Procédé selon la revendication 4, caractérisé en ce que ledit écran est poncé après traitement thermique.

7. Procédé selon la revendication 4, caractérisé en ce que ledit revêtement est mis à la masse.
